# EUROPEAN PATENT SPECIFICATION

(11) **EP 2 993 584 B1**
(45) Date of publication and mention of the grant of the patent: **21.03.2018**
(21) Application number: 15168933.8
(22) Date of filing: 22.05.2015
(51) Int. Cl.: G06F 9/48, G06F 9/50

(54) **METHOD AND DEVICE FOR CONTROLLING BACKGROUND APPLICATION**
VERFAHREN UND VORRICHTUNG ZUR STEUERUNG EINER HINTERGRUNDANWENDUNG
PROCEDE ET DISPOSITIF DE COMMANDE D'APPLICATION D'ARRIERE-PLAN

(30) Priority: 29.08.2014 CN 201410436455
(43) Date of publication of application: 09.03.2016
(73) Proprietor: Xiaomi Inc., Beijing 100085 (CN)
(72) Inventor: YUAN, Jun, 100085 BEIJING (CN); LI, Minghao, 100085 BEIJING (CN); LIANG, Jinxiang, 100085 BEIJING (CN); TAO, Jiantao, 100085 BEIJING (CN)
(74) Representative: Delumeau, François Guy

(56) References cited:
- US-A1- 2013 074 082
- US-A1- 2013 343 373
- US-A1- 2014 007 106
- Rajesh Prodduturi: "Effective Handling of Low Memory Scenarios in Android using Logs", Master Technical Dissertation Report, 23 June 2013 (2013-06-23), pages 1-75, XP055244585, Retrieved from the Internet: URL:http://www.it.iitb.ac.in/frg/wiki/imag es/temp/c/ca/20130625181316!phpQXBD6c.pdf [retrieved on 2016-01-25]

## Description

### TECHNICAL FIELD

The present disclosure relates to a field of a terminal device, and more particularly, to a method for controlling a background application, a device for controlling a background application and a terminal device.

### BACKGROUND

As a terminal device develops toward an intelligent direction, there are more and more applications (APPs), and a user enjoys the convenience due to the intelligence of the terminal device. When the user uses the terminal device, he/she may be accustomed to keeping several frequently used applications in a background running state. The frequently used applications include twitter, WeChat, QQ, etc. An application in a background running state on the terminal device may be called a background application. If a number of background applications is small, a memory resource in the terminal device being occupied is small. If the number of background applications is large, the memory resource in the terminal device being occupied is large, such that a processing speed of the terminal device is affected. Thus, it is important to know how to control a background application in the terminal device.

In a related art, a method for controlling a background application is as follows. A maximum threshold is set, and it is monitored by the terminal device whether the number of background applications is greater than the maximum threshold. If the number of background applications is less than or equal to the maximum threshold, each of the background applications is allowed to be in a background running state. If the number of background applications is greater than the maximum threshold, a background application occupying a biggest memory may be exited. For example, assuming the maximum threshold is 25, if the number of background applications is 24, each of the background applications is allowed to be in a background running state. If the number of background applications is 26, the background application occupying the biggest memory may be exited so as to release the memory.

In the above described method, it is determined whether a background application is exited by determining whether the number of background applications is greater than the maximum threshold. If the number of background applications is greater than the maximum threshold, the background application occupying the biggest memory may be exited. While the user may wish to keep the background application occupying the biggest memory in a background running state all the time, the exit of the background application may affect the user experience. Thus, with the above described method, the background application in the terminal device cannot be well controlled, such that the user experience is affected.

Document US 2014/0007106 discloses a method to notify users of applications running in the background.

Document "Effective Handling of Low Memory Scenarios in Android using Logs" of R. Prodduturi, Master Technical Report of 23 June 2013 discloses a method to terminate background programs.

Document US 2013/0074082 discloses a method of releasing memory by closing programs whose running states are idle.

### SUMMARY

The present disclosure provides a method for controlling a background application, a device for controlling a background application and a terminal device to solve problems in the related art.

According to a first aspect, the invention relates to a method for controlling a background application, including:
creating an application list according to running applications in an operating system, in which the application list at least comprises identifications of the running applications in the operating system;
traversing the identifications in the application list;
determining whether an application corresponding to a current traversed identification is a background application;
if the application corresponding to the current traversed identification is a background application, determining whether a predetermined white list comprises the current traversed identification and whether a number of identifications corresponding to background applications in the application list is greater than a predetermined threshold, in which the predetermined white list comprises identifications of background applications assigned by a user;
selecting an identification corresponding to another background application from the application list and exiting the background application corresponding to the selected identification, if the predetermined white list comprises the current traversed identification and the number is greater than the predetermined threshold;
exiting the application corresponding to the current traversed identification if the predetermined white list does not comprise the current traversed identification and the number is greater than the predetermined threshold, the method further comprising:
   obtaining an inactive time period of the application corresponding to the current traversed identification if the predetermined white list comprises the current traversed identification and the number is not greater than the predetermined threshold;
   determining whether the inactive time period is greater than a first predetermined time period;
   exiting the application corresponding to the current traversed identification if the inactive time period is greater than the first predetermined time period,
   the method further comprising:
   detecting whether the inactive time period is greater than a second predetermined time period if the inactive time period is not greater than the first predetermined time period;
   releasing a memory occupied by a user interface in the application corresponding to the current traversed identification if the inactive time period is greater than the second predetermined time period, in which the second predetermined time period is less than the first predetermined time period.

According to an embodiment, the step of creating the application list according to running applications in the operating system comprises:
calculating running state priorities of the running applications in the operating system, in which the running state priorities rank from high to low as: foreground, visible, appreciable, background;
sequencing the identifications of the running applications according to the running state priorities from high to low to obtain the application list.

According to an embodiment, the step of determining whether the application corresponding to the current traversed identification is a background application comprises:
obtaining a running state priority of the application corresponding to the current traversed identification;
determining that the application corresponding to the current traversed identification is a background application if the running state priority of the application corresponding to the current traversed identification is background.

According to an embodiment, the step of selecting an identification corresponding to a background application from the application list comprises:
finding one or more identifications preceding the current traversed identification in the application list and not included in the predetermined white list;
selecting one of the one or more identifications or selecting an identification closest to the current traversed identification from the one or more identifications, if at least one identification preceding the current traversed identification in the application list and not included in the predetermined white list is found;
selecting the current traversed identification if no identification preceding the current traversed identification in the application list and not included in the predetermined white list is found.

According to an embodiment, the method further comprises:
obtaining an inactive time period of the application corresponding to the current traversed identification if the predetermined white list does not comprise the current traversed identification and the number is not greater than the predetermined threshold;
determining whether the inactive time period is greater than a third predetermined time period;
releasing a memory occupied by a user interface in the application corresponding to the current traversed identification if the inactive time period is greater than the third predetermined time period.

According to an embodiment, the step of obtaining the inactive time period of the application corresponding to the current traversed identification comprises:
counting a time period for which a process of the application corresponding to the current traversed identification does not interact with other processes in the operating system;
defining the time period as the inactive time period.

According to a second aspect the invention relates to a device for controlling a background application, comprising:
a creating unit, configured to create an application list according to running applications in an operating system, in which the application list at least comprises identifications of the running applications in the operating system;
a traversing unit, configured to traverse the identifications in the application list;
a first determining unit, configured to determine whether an application corresponding to a current traversed identification is a background application;
a second determining unit, configured, if the application corresponding to the current traversed identification is a background application, to determine whether a predetermined white list comprises the current traversed identification and whether a number of identifications corresponding to background applications in the application list is greater than a predetermined threshold, in which the predetermined white list comprises identifications of background applications assigned by a user;
a first closing unit configured to:
   select an identification corresponding to another background application from the application list and exit the background application corresponding to the selected identification, if the predetermined white list comprises the current traversed identification and the number is greater than the predetermined threshold;
   exit the application corresponding to the current traversed identification if the predetermined white list does not comprise the current traversed identification and the number is greater than the predetermined threshold, the device further comprising:
a first obtaining unit, configured to obtain an inactive time period of the application corresponding to the current traversed identification if the predetermined white list comprises the current traversed identification and the number is not greater than the predetermined threshold;
a third determining unit, configured to determine whether the inactive time period is greater than a first predetermined time period;
a second closing unit, configured to exit the application corresponding to the current traversed identification if the inactive time period is greater than the first predetermined time period, the device further comprising:
   a detecting unit, configured to detect whether the inactive time period is greater than a second predetermined time period if the inactive time period is not greater than the first predetermined time period;
   a first releasing unit, configured to release a memory occupied by a user interface in the application corresponding to the current traversed identification if the inactive time period is greater than the second predetermined time period, in which the second predetermined time period is less than the first predetermined time period.

According to an embodiment, the creating unit comprises:
a calculating subunit, configured to calculate running state priorities of the running applications in the operating system, in which the running state priorities rank from high to low as: foreground, visible, appreciable, background;
a sequencing subunit, configured to sequence the identifications of the running applications according to the running state priorities from high to low to obtain the application list.

According to an embodiment, the first determining unit comprises:
an obtaining subunit, configured to obtain a running state priority of the application corresponding to the current traversed identification;
a first determining subunit, configured to determine that the application corresponding to the current traversed identification is a background application if the running state priority of the application corresponding to the current traversed identification is background.

According to an embodiment, the first closing unit comprises:
a finding subunit, configured to find one or more identifications preceding the current traversed identification in the application list and not included in the predetermined white list;
a selecting subunit configured to:
   select one of the one or more identifications or select an identification closest to the current traversed identification from the one or more identifications, if at least one identification preceding the current traversed identification in the application list and not included in the predetermined white list is found;
   select the current traversed identification if no identification preceding the current traversed identification in the application list and not included in the predetermined white list is found.

According to an embodiment, the device further comprises:
a second obtaining unit, configured to obtain an inactive time period of the application corresponding to the current traversed identification if the predetermined white list does not comprise the current traversed identification and the number is not greater than the predetermined threshold;
a fourth determining unit, configured to determine whether the inactive time period is greater than a third predetermined time period;
a second releasing unit, configured to release a memory occupied by a user interface in the application corresponding to the current traversed identification if the inactive time period is greater than the third predetermined time period.

According to an embodiment, the first obtaining unit and the second obtaining unit comprise:
a counting subunit, configured to count a time period for which a process of the application corresponding to the current traversed identification does not interact with other processes in the operating system;
a second determining subunit, configured to define the time period as the inactive time period.

According to a third aspect, the invention relates to a terminal device, including:
a processor;
a memory configured to store instructions executable by the processor;
in which the processor is configured to:
   create an application list according to running applications in an operating system, in which the application list at least comprises identifications of the running applications in the operating system;
   traverse the identifications in the application list;
   determine whether an application corresponding to a current traversed identification is a background application;
   if the application corresponding to the current traversed identification is a background application, determine whether a predetermined white list comprises the current traversed identification and whether a number of identifications corresponding to background applications in the application list is greater than a predetermined threshold, in which the predetermined white list comprises identifications of background applications assigned by a user;
   select an identification corresponding to another background application from the application list and exit the background application corresponding to the selected identification, if the predetermined white list comprises the current traversed identification and the number is greater than the predetermined threshold;
   exit the application corresponding to the current traversed identification if the predetermined white list does not comprise the current traversed identification and the number is greater than the predetermined threshold the processor being further configured to:
      obtain an inactive time period of the application corresponding to the current traversed identification if the predetermined white list comprises the current traversed identification and the number is not greater than the predetermined threshold;
      determine whether the inactive time period is greater than a first predetermined time period;
      exit the application corresponding to the current traversed identification if the inactive time period is greater than the first predetermined time period, the processor being further configured to:
         detect whether the inactive time period is greater than a second predetermined time period if the inactive time period is not greater than the first predetermined time period;
         release a memory occupied by a user interface in the application corresponding to the current traversed identification if the inactive time period is greater than the second predetermined time period, in which the second predetermined time period is less than the first predetermined time period.

In one particular embodiment, the steps of the method for controlling a background application are determined by computer program instructions.

Consequently, according to a fourth aspect, the invention is also directed to a computer program product including instructions for executing the steps of a method for operating a television application as described above when those instructions are executed by a computer.

This program can use any programming language and take the form of source code, object code or a code intermediate between source code and object code, such as a partially compiled form, or any other desirable form.

The invention is also directed to a computer-readable information medium containing instructions of a computer program product. as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution disclosed in the embodiments of the present disclosure can have an advantageous effect as follows. In order to determine by a terminal device a background application to be exited, it is necessary to consider both whether the number of background applications is greater than a predetermined threshold and whether a predetermined white list comprises an identification of the background application to be exited. The predetermined white list comprises identifications of background applications assigned by a user. That is, the user does not want to exit any of the background applications corresponding to the identifications in the predetermined white list. For a current traversed identification, if the predetermined white list comprises the current traversed identification and the number of background applications is greater than the predetermined threshold, a background application is selected and exited. If the predetermined white list does not comprise the current traversed identification and the number of background applications is greater than the predetermined threshold, an application corresponding to the current traversed identification is exited. Since the background applications assigned by the user are not exited rashly, the background applications can be better controlled, compared to the method in the related art in which an application to be exited occupying a biggest memory may be a background application assigned by the user, thus improving the user experience.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart illustrating a method for controlling a background application according to an exemplary embodiment of the present disclosure;
Fig. 2 is a flow chart illustrating another method for controlling a background application according to an exemplary embodiment of the present disclosure;
Fig. 3 is a block diagram illustrating a device for controlling a background application according to an exemplary embodiment of the present disclosure; and
Fig. 4 is a block diagram illustrating a terminal device according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

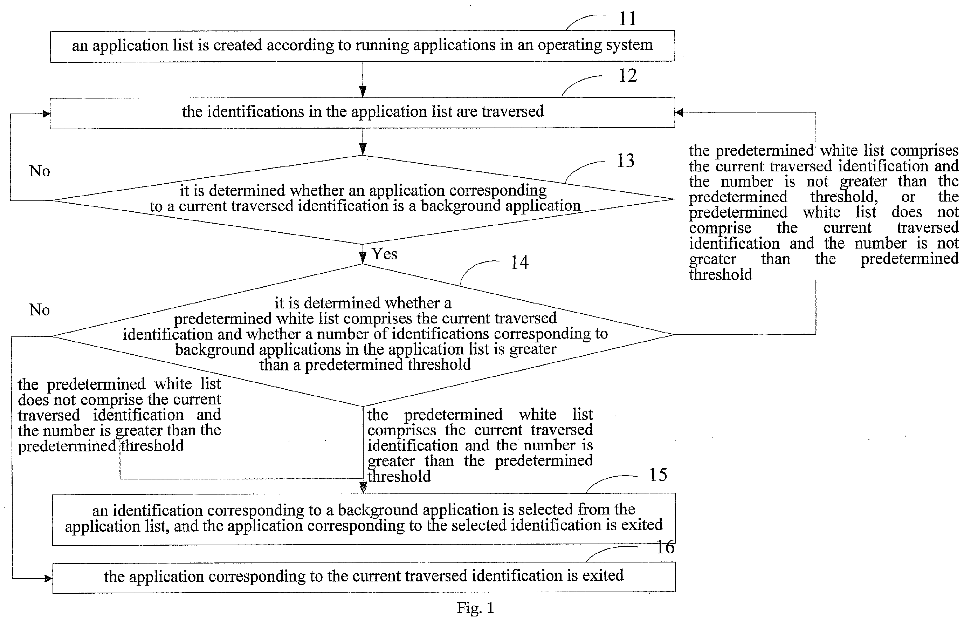

Fig. 1 is a flow chart illustrating a method for controlling a background application according to an exemplary embodiment of the present disclosure. As shown in Fig. 1, the method used in a terminal device includes following steps.

In step 11, an application list is created according to running applications in an operating system.

Generally, the operating system is installed on a terminal device. A frequently used operating system may be an Android system, a Windows system, an IOS system and so on. Many applications may be installed on the terminal device to meet various requirements of a user. The user may also set up required applications. Only in the operating system of the terminal device can these applications run. Thus, in order to control the background applications, the application list is created according to running applications in the operating system. The application list comprises identifications of the running applications in the operating system. An identification of an application may be, but is not limited to, a name, an icon of the application and so on.

The application list may comprise information, such as the identifications, last activated time and running state priorities of the running applications in the operating system. The application list at least comprises the identifications of the running applications in the operating system.

In step 12, the identifications in the application list are traversed.

In step 13, it is determined whether an application corresponding to a current traversed identification is a background application.

The identifications in the application list may be traversed, and an identification being traversed is defined as a current traversed identification. Since the present invention aims to control background applications, it is firstly determined whether the application corresponding to the current traversed identification is a background application.

If the application corresponding to the current traversed identification is a background application, in step 14, it is determined whether a predetermined white list comprises the current traversed identification and whether a number of identifications corresponding to background applications in the application list is greater than a predetermined threshold.

If the application corresponding to the current traversed identification is not a background application, step 12 is executed.

The predetermined white list comprises identifications of background applications assigned by the user, i.e. the identifications of background applications that the user does not want to exit. For example, a background application assigned by the user may be QQ, WeChat, fetion, Baidu map and so on. The predetermined white list may comprise identifications of applications such as QQ, WeChat, fetion, Baidu map, etc.

The predetermined threshold may be set according to a hardware configuration of the terminal device and practical requirements. For example, the predetermined threshold may be set to 10, 20, or 25, etc.

If the predetermined white list comprises the current traversed identification and the number of identifications corresponding to background applications in the application list is greater than the predetermined threshold, in step 15, an identification corresponding to a background application is selected from the application list, and the application corresponding to the selected identification is exited.

If the predetermined white list comprises the current traversed identification and the number of identifications corresponding to background applications in the application list is greater than the predetermined threshold, in order to ensure that the operating system runs normally and that the user experience is good, a background application may be selected and exited.

If the predetermined white list does not comprise the current traversed identification and the number of identifications corresponding to background applications in the application list is greater than the predetermined threshold, in step 16, the application corresponding to the current traversed identification is exited.

If the predetermined white list does not comprise the current traversed identification and the number of identifications corresponding to background applications in the application list is greater than the predetermined threshold, the application corresponding to the current traversed identification may be exited directly. Since the predetermined white list dose not comprise the current traversed identification, that is, the application corresponding to the current traversed identification is not the background application assigned by the user, the application corresponding to the current traversed identification may be exited directly, such that memory resources may be saved, thus improving the user experience.

If the predetermined white list comprises the current traversed identification and the number of identifications corresponding to background applications in the application list is not greater than the predetermined threshold, or the predetermined white list does not comprise the current traversed identification and the number of identifications corresponding to background applications in the application list is not greater than the predetermined threshold, step 12 is executed.

With the method for controlling the background application according to embodiments of the present disclosure, in order to determine by the terminal device a background application to be exited, it is necessary to consider both whether the number of background applications is greater than the predetermined threshold and whether the predetermined white list comprises the identification of the background application to be exited. The white list comprises identifications of background applications assigned by the user. That is, the user does not want to exit any of the background applications corresponding to the identifications in the predetermined white list. For the current traversed identification, if the predetermined white list comprises the current traversed identification and the number of background applications is greater than the predetermined threshold, a background application is selected and exited. If the predetermined white list does not comprise the current traversed identification and the number of background applications is greater than the predetermined threshold, the application corresponding to the current traversed identification is exited. Since a background application assigned by the user is not exited rashly, the background applications may be better controlled, compared to the method in the related art in which the background application to be exited occupying a biggest memory may be a background application assigned by the user, such that the user experience may be improved.

Alternatively, in step 11, a step of creating the application list according to the running applications in the operating system includes:
calculating running state priorities of the running applications in the operating system;
sequencing the identifications of the running applications according to the running state priorities from high to low to obtain the application list.

Generally, the running state priorities may rank from high to low as: foreground, visible, appreciable, background. Thus, the running state priorities of the running applications in the operating system may be calculated by the terminal device, and then the identifications of the running applications may be sequenced according to the running state priorities from high to low to obtain the application list.

A method for creating an application list is just recited herein. There are several other methods for creating an application list. For example, the identifications of the running applications may be sequenced according to the running state priorities from low to high to obtain the application list. Other methods for creating an application list are not elaborated herein.

Since the change in the running applications in the operating system in a short time is small, in order to save resources, the running state priorities of the running applications in the operating system may be calculated by the terminal device according to a preset period. The preset period may be set according to practical requirements. For example, the preset period may be set to 30s, 45s, 60s and so on.

Alternatively, in step 13, a step of determining whether the application corresponding to the current traversed identification is a background application includes:
obtaining a running state priority of the application corresponding to the current traversed identification;
determining that the application corresponding to the current traversed identification is a background application if the running state priority of the application corresponding to the current traversed identification is background.

Since the running state priorities of the running applications in the operating system may be calculated by the terminal device, a background application may be determined according to the running state priority of the application corresponding to the current traversed identification. That is, the application whose running state priority is background may be determined as a background application.

Alternatively, in step 15, a step of selecting an identification corresponding to a background application from the application list includes:
finding one or more identifications preceding the current traversed identification in the application list and not included in the predetermined white list;
selecting one of the one or more identifications or selecting an identification closest to the current traversed identification from the one or more identifications, if at least one identification preceding the current traversed identification in the application list and not included in the predetermined white list is found;
selecting the current traversed identification if no identification preceding the current traversed identification in the application list and not included in the predetermined white list is found.

In order to select an identification corresponding to a background application from the application list, one or more identifications preceding the current traversed identification in the application list and not included in the predetermined white list may be found firstly, that is, a background application not assigned by the user may be found firstly. If at least one identification is found, one of the one or more identifications or an identification closest to the current traversed identification may be selected. If no identification is found, that is, all of background applications corresponding to the one or more identifications preceding the current traversed identification are background applications assigned by the user, the current traversed identification may be selected.

Alternatively, the method further includes:
obtaining an inactive time period of the application corresponding to the current traversed identification if the predetermined white list comprises the current traversed identification and the number is not greater than the predetermined threshold;
determining whether the inactive time period is greater than a first predetermined time period;
exiting the application corresponding to the current traversed identification if the inactive time period is greater than the first predetermined time period.

In order to avoid the waste of the memory resources, in a case that the predetermined white list comprises the current traversed identification and the number of identifications corresponding to background applications in the application list is not greater than the predetermined threshold, the inactive time period of the application corresponding to the current traversed identification may be obtained. If the inactive time period is greater than the first predetermined time period, the application corresponding to the current traversed identification may be exited directly. That is, even though the predetermined white list comprises the current traversed identification and the number of identifications corresponding to background applications in the application list is not greater than the predetermined threshold, if the application corresponding to the current traversed identification is inactive in a long time, the application may be exited. The first predetermined time period may be set according to practical requirements. For example, the first predetermined time period may be set to 3 minutes, 5 minutes, 10 minutes and so on.

For example, with respect to QQ, QQ may be in a background running state if the user does not use it. If the inactive time period of QQ is greater than ten minutes, although the predetermined white list comprises the identification of QQ, QQ may be exited to save the memory resources.

Alternatively, the method further includes:
detecting whether the inactive time period is greater than a second predetermined time period if the inactive time period is not greater than the first predetermined time period;
releasing a memory occupied by a user interface in the application corresponding to the current traversed identification if the inactive time period is greater than the second predetermined time period, in which the second predetermined time period is less than the first predetermined time period.

Following the above example, if the inactive time period is not greater than the first predetermined time period, it may be detected whether the inactive time period is greater than the second predetermined time period. The second predetermined time period is less than the first predetermined time period. If the inactive time period is greater than the second predetermined time period, the memory occupied by the user interface in the application corresponding to the current traversed identification may be released. If the inactive time period is not greater than the second predetermined time period, a next identification in the application list may be traversed. The second predetermined time period may be set according to practical requirements. For example, the second predetermined time period may be set to 3 minutes, 5 minutes, 10 minutes and so on.

For example, with respect to QQ, QQ may be in a background running state if the user does not use it. If the inactive time period of QQ is greater than five minutes, although the predetermined white list comprises the identification of QQ, the memory occupied by the user interface in QQ may be released to save the memory resources.

Generally, an application may include two parts: logic codes and a user interface (UI). The UI comprises elements such as pictures and cartoons. In a normal case, the two parts may be stored in the memory. In an Android system, the UI may be activities. Activities are containers used to store the UI of the application. Since a memory occupied by the logic codes is small, a memory occupied by the UI of the application whose inactive time period is greater than the second predetermined time period may be released instead of destroying the logic codes of the application, such that a large number of memory resources may be saved. If the running state of the application becomes foreground, since the logic codes of the application are stored, the UI may be reconstructed, such that the user is not affected.

Alternatively, the method further includes:
obtaining an inactive time period of the application corresponding to the current traversed identification if the predetermined white list does not comprise the current traversed identification and the number is not greater than the predetermined threshold;
determining whether the inactive time period is greater than a third predetermined time period;
releasing a memory occupied by a user interface in the application corresponding to the current traversed identification if the inactive time period is greater than the third predetermined time period.

Accordingly, in order to save the memory resources, in a case that the predetermined white list does not comprise the current traversed identification and the number of identifications corresponding to background applications in the application list is not greater than the predetermined threshold, the inactive time period of the application corresponding to the current traversed identification may be obtained. If the inactive time period is greater than the third predetermined time period, the memory occupied by the user interface in the application corresponding to the current traversed identification may be released.

The third predetermined time period may be set according to practical requirements. For example, the third predetermined time period may be set to 3 minutes, 5 minutes, 10 minutes and so on.

For example, with respect to a calculator, the calculator may be in a background running state if the user does not use it. If the inactive time period of the calculator is greater than five minutes, since the predetermined white list does not comprise the identification of the calculator, the memory occupied by the user interface in the calculator may be released to save the memory resources.

Alternatively, a step of obtaining the inactive time period of the application corresponding to the current traversed identification includes:
counting a time period for which a process of the application corresponding to the current traversed identification does not interact with other processes in the operating system;
defining the time period as the inactive time period.

An inactive state of the application refers to a state in which the process of the application does not interact with other processes in the operating system. An interaction may include sending a data request, responding to data requests or communication requests sent by other processes and so on. The time period for which the process of the application corresponding to the current traversed identification does not interact with other processes in the operating system may be counted to obtain the inactive time period of the application corresponding to the current traversed identification.

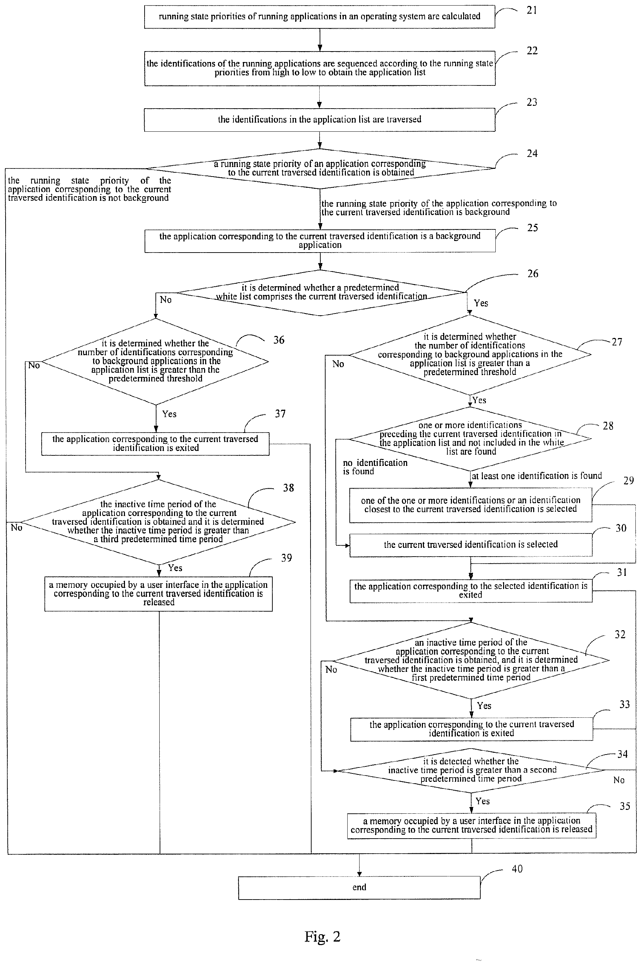

Fig. 2 is a flow chart illustrating another method for controlling a background application according to an exemplary embodiment of the present disclosure. As shown in Fig. 2, the method used in a terminal device includes following steps.

In step 21, running state priorities of running applications in an operating system are calculated.

Generally, the running state priorities of running applications may rank from high to low as: foreground, visible, appreciable, background. Methods for calculating the running state priorities of running applications used in different operating systems may be different. Take an Android system as an example, the running state priorities of running applications may be calculated by the Activity Manager Service.

In step 22, the identifications of the running applications are sequenced according to the running state priorities from high to low to obtain the application list.

A method for creating an application list is just recited herein. There are several other methods for creating an application list. For example, the identifications of the running applications may be sequenced according to the running state priorities from low to high to obtain the application list. Other methods for creating an application list are not elaborated herein.

An identification of an application may be, but is not limited to, a name, an icon of the application and so on.

In step 23, the identifications in the application list are traversed.

For individual traversed identifications, procedures for controlling background applications are identical. In the following, take a current traversed identification as an example.

In step 24, a running state priority of an application corresponding to the current traversed identification is obtained.

If the running state priority of the application corresponding to the current traversed identification is background, in step 25, the application corresponding to the current traversed identification is a background application, step 26 is followed.

If the running state priority of the application corresponding to the current traversed identification is not background, step 40 is followed.

In step 26, it is determined whether a predetermined white list comprises the current traversed identification.

The predetermined white list comprises identifications of background applications assigned by the user, i.e. the identifications of background applications that the user does not want to exit. For example, a background application assigned by the user may be QQ, WeChat, fetion, Baidu map and so on. The predetermined white list may comprise identifications of applications such as QQ, WeChat, fetion, Baidu map, etc.

If the predetermined white list comprises the current traversed identification, in step 27, it is determined whether the number of identifications corresponding to background applications in the application list is greater than a predetermined threshold.

The predetermined threshold may be set according to a hardware configuration of the terminal device and practical requirements. For example, the predetermined threshold may be set to 10, 20, or 25, etc.

If the number of identifications corresponding to background applications in the application list is greater than the predetermined threshold, in step 28, one or more identifications preceding the current traversed identification in the application list and not included in the predetermined white list are found.

If at least one identification is found, in step 29, one of the one or more identifications or an identification closest to the current traversed identification is selected, step 31 is followed.

If no identification is found, in step 30, the current traversed identification is selected and step 31 is followed.

In step 31, the application corresponding to the selected identification is exited, and step 40 is followed.

If the number of identifications corresponding to background applications in the application list is not greater than the predetermined threshold, in step 32, an inactive time period of the application corresponding to the current traversed identification is obtained, and it is determined whether the inactive time period is greater than a first predetermined time period.

If the inactive time period is greater than the first predetermined time period, in step 33, the application corresponding to the current traversed identification is exited, and step 40 is followed.

In order to avoid the waste of the memory resources, in a case that the predetermined white list comprises the current traversed identification and the number of identifications corresponding to background applications in the application list is not greater than the predetermined threshold, the inactive time period of the application corresponding to the current traversed identification may be obtained. If the inactive time period is greater than the first predetermined time period, the application corresponding to the current traversed identification may be exited directly. That is, even though the predetermined white list comprises the current traversed identification and the number of identifications corresponding to background applications in the application list is not greater than the predetermined threshold, if the application corresponding to the current traversed identification is inactive in a long time, the application may be exited. The first predetermined time period may be set according to practical requirements. For example, the first predetermined time period may be set to 3 minutes, 5 minutes, 10 minutes and so on.

For example, with respect to QQ, QQ may be in a background running state if the user does not use it. If the inactive time period of QQ is greater than ten minutes, although the predetermined white list comprises the identification of QQ, QQ may be exited to save the memory resources.

If the inactive time period is not greater than the first predetermined time period, in step 34, it is detected whether the inactive time period is greater than a second predetermined time period.

If the inactive time period is greater than the second predetermined time period, in step 35, a memory occupied by a user interface in the application corresponding to the current traversed identification is released, and step 40 is followed.

If the inactive time period is not greater than the second predetermined time period, step 40 is followed.

Following the above example, if the inactive time period is not greater than the first predetermined time period, it may be detected whether the inactive time period is greater than the second predetermined time period. The second predetermined time period is less than the first predetermined time period. If the inactive time period is greater than the second predetermined time period, the memory occupied by the user interface in the application corresponding to the current traversed identification may be released. If the inactive time period is not greater than the second predetermined time period, a next identification in the application list may be traversed. The second predetermined time period may be set according to practical requirements. For example, the second predetermined time period may be set to 3 minutes, 5 minutes, 10 minutes and so on.

For example, with respect to QQ, QQ may be in a background running state if the user does not use it. If the inactive time period of QQ is greater than five minutes, although the predetermined white list comprises the identification of QQ, the memory occupied by the user interface in QQ may be released to save the memory resources.

Since the memory occupied by the UI of the application whose inactive time period is greater than the second predetermined time period is released, a large number of memory resources may be saved. If the running state of the application becomes foreground, the UI may be reconstructed, such that the user is not affected.

If the predetermined white list does not comprise the current traversed identification, in step 36, it is determined whether the number of identifications corresponding to background applications in the application list is greater than the predetermined threshold.

If the number of identifications corresponding to background applications in the application list is greater than the predetermined threshold, in step 37, the application corresponding to the current traversed identification is exited, and step 40 is followed.

If the predetermined white list does not comprise the current traversed identification and the number of identifications corresponding to background applications in the application list is greater than the predetermined threshold, the application corresponding to the current traversed identification may be exited directly. Since the predetermined white list dose not comprise the current traversed identification, that is, the application corresponding to the current traversed identification is not the background application assigned by the user, the application corresponding to the current traversed identification may be exited directly, such that the memory resources may be saved, thus improving the user experience.

If the number of identifications corresponding to background applications in the application list is not greater than the predetermined threshold, in step 38, the inactive time period of the application corresponding to the current traversed identification is obtained and it is determined whether the inactive time period is greater than a third predetermined time period.

If the inactive time period is greater than the third predetermined time period, in step 39, a memory occupied by a user interface in the application corresponding to the current traversed identification is released, and step 40 is followed.

If the inactive time period is not greater than the third predetermined time period, step 40 is followed.

Accordingly, in order to save the memory resources, in a case that the predetermined white list does not comprise the current traversed identification and the number of identifications corresponding to background applications in the application list is not greater than the predetermined threshold, the inactive time period of the application corresponding to the current traversed identification may be obtained. If the inactive time period is greater than the third predetermined time period, the memory occupied by the user interface in the application corresponding to the current traversed identification may be released.

The third predetermined time period may be set according to practical requirements. For example, the third predetermined time period may be set to 3 minutes, 5 minutes, 10 minutes and so on.

For example, with respect to a calculator, the calculator may be in a background running state if the user does not use it. If the inactive time period of the calculator is greater than five minutes, since the predetermined white list does not comprise the identification of the calculator, the memory occupied by the user interface in the calculator may be released to save the memory resources.

In step 40, it is an end.

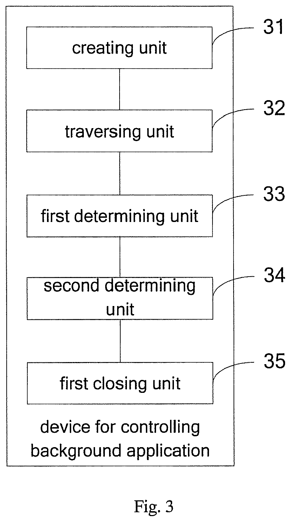

Fig. 3 is a block diagram illustrating a device for controlling a background application according to an exemplary embodiment of the present disclosure. As shown in Fig. 3, the device includes a creating unit 31, a traversing unit 32, a first determining unit 33, a second determining unit 34 and a first closing unit 35.

The creating unit 31 is configured to create an application list according to running applications in an operating system, in which the application list at least comprises identifications of the running applications in the operating system.

The traversing unit 32 is configured to traverse the identifications in the application list.

The first determining unit 33 is configured to determine whether an application corresponding to a current traversed identification is a background application.

The second determining unit 34 is configured to determine whether a predetermined white list comprises the current traversed identification and whether a number of identifications corresponding to background applications in the application list is greater than a predetermined threshold, if the application corresponding to the current traversed identification is a background application, in which the predetermined white list comprises identifications of background applications assigned by a user.

The first closing unit 35 is configured to:
select an identification corresponding to a background application from the application list and exit the background application corresponding to the selected identification, if the predetermined white list comprises the current traversed identification and the number is greater than the predetermined threshold;
exit the application corresponding to the current traversed identification if the predetermined white list does not comprise the current traversed identification and the number is greater than the predetermined threshold.

With the device for controlling a background application according to embodiments of the present disclosure, in order to determine by the terminal device a background application to be exited, it is necessary to consider both whether the number of background applications is greater than the predetermined threshold and whether the predetermined white list comprises the identification of the background application to be exited. The white list comprises identifications of background applications assigned by the user. That is, the user does not want to exit any of the background applications corresponding to the identifications in the predetermined white list. For the current traversed identification, if the predetermined white list comprises the current traversed identification and the number of background applications is greater than the predetermined threshold, a background application is selected and exited. If the predetermined white list does not comprise the current traversed identification and the number of background applications is greater than the predetermined threshold, the application corresponding to the current traversed identification is exited. Since a background application assigned by the user is not exited rashly, the background applications may be better controlled, compared to the method in the related art in which the background application to be exited occupying a biggest memory may be a background application assigned by the user, such that the user experience may be improved.

Alternatively, the creating unit 31 includes a calculating subunit and a sequencing subunit.

The calculating subunit is configured to calculate running state priorities of the running applications in the operating system, in which the running state priorities rank from high to low as: foreground, visible, appreciable, background.

The sequencing subunit is configured to sequence the identifications of the running applications according to the running state priorities from high to low to obtain the application list.

Alternatively, the first determining unit 33 includes an obtaining subunit and a first determining subunit.

The obtaining subunit is configured to obtain a running state priority of the application corresponding to the current traversed identification.

The first determining subunit is configured to determine that the application corresponding to the current traversed identification is a background application if the running state priority of the application corresponding to the current traversed identification is background.

Alternatively, the first closing unit 35 includes a finding subunit and a selecting subunit.

The finding subunit is configured to find one or more identifications preceding the current traversed identification in the application list and not included in the predetermined white list.

The selecting subunit is configured to:
select one of the one or more identifications or select an identification closest to the current traversed identification from the one or more identifications, if at least one identification preceding the current traversed identification in the application list and not included in the predetermined white list is found;
select the current traversed identification if no identification preceding the current traversed identification in the application list and not included in the predetermined white list is found.

Alternatively, the device further includes a first obtaining unit, a third determining unit, and a second closing unit.

The first obtaining unit is configured to obtain an inactive time period of the application corresponding to the current traversed identification if the predetermined white list comprises the current traversed identification and the number is not greater than the predetermined threshold.

The third determining unit is configured to determine whether the inactive time period is greater than a first predetermined time period.

The second closing unit is configured to exit the application corresponding to the current traversed identification if the inactive time period is greater than the first predetermined time period.

Alternatively, the device further includes a detecting unit and a first releasing unit.

The detecting unit is configured to detect whether the inactive time period is greater than a second predetermined time period if the inactive time period is not greater than the first predetermined time period.

The first releasing unit is configured to release a memory occupied by a user interface in the application corresponding to the current traversed identification if the inactive time period is greater than the second predetermined time period, in which the second predetermined time period is less than the first predetermined time period.

Alternatively, the device further includes a second obtaining unit, a fourth determining unit, and a second releasing unit.

The second obtaining unit is configured to obtain an inactive time period of the predetermined application corresponding to the current traversed identification if the white list does not comprise the current traversed identification and the number is not greater than the predetermined threshold.

The fourth determining unit is configured to determine whether the inactive time period is greater than a third predetermined time period.

The second releasing unit is configured to release a memory occupied by a user interface in the application corresponding to the current traversed identification if the inactive time period is greater than the third predetermined time period.

Alternatively, the first obtaining unit and the second obtaining unit include a counting subunit and a second determining subunit.

The counting subunit is configured to count a time period for which a process of the application corresponding to the current traversed identification does not interact with other processes in the operating system.

The second determining subunit is configured to define the time period as the inactive time period.

With respect to the devices in the above embodiments, the specific manners for performing operations for individual modules therein have been described in detail in the embodiments regarding the methods for controlling a background application, which are not elaborated herein again.

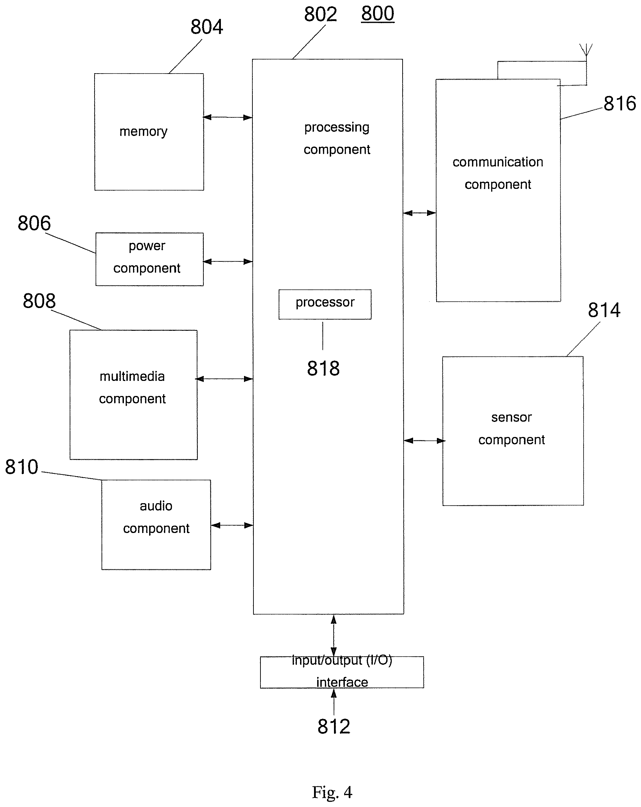

Fig. 4 is a schematic diagram illustrating a device 800 for controlling a background application according to an exemplary embodiment of the present disclosure. For example, the device 800 may be a mobile phone, a computer, a digital broadcasting terminal, a message receiving and sending equipment, a game controller, a tablet device, a medical equipment, a fitness equipment, a PDA and so on.

Referring to Fig. 4, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, control, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input an audio signal. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an opened/closed status of the device 800, relative positioning of components (e.g., the display and the keypad) of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate wired or wireless communication between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast control system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods according to embodiments of the present disclosure.

In exemplary embodiments, there is also provided a non-transitory computer-readable storage medium including instructions, such as the memory 804 including instructions, and the instructions are executable by the processor 820 of the device 800, for performing the above-described methods. For example, the non-transitory computer-readable storage medium may be a ROM, a RAM (random access memory), a CD-ROM, a magnetic tape, a floppy disc, an optical data storage device, and the like.

A non-transitory computer-readable storage medium is provided, including stored therein instructions that, when executed by a processor of a terminal device, causes the terminal device to execute a method for controlling a background application as described above. Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A method for controlling a background application, comprising:
creating (11) an application list according to running applications in an operating system, wherein the application list at least comprises identifications of the running applications in the operating system;
traversing (12) the identifications in the application list;
determining (13) whether an application corresponding to a current traversed identification is a background application;
if the application corresponding to the current traversed identification is a background application, determining (14) whether a predetermined white list comprises the current traversed identification and whether a number of identifications corresponding to background applications in the application list is greater than a predetermined threshold, wherein the predetermined white list comprises identifications of background applications assigned by a user;
selecting (15) an identification corresponding to another background application from the application list and exiting the background application corresponding to the selected identification, if the predetermined white list comprises the current traversed identification and the number is greater than the predetermined threshold;
exiting (16) the application corresponding to the current traversed identification if the predetermined white list does not comprise the current traversed identification and the number is greater than the predetermined threshold, the method further comprising:
obtaining (32) an inactive time period of the application corresponding to the current traversed identification if the predetermined white list comprises the current traversed identification and the number is not greater than the predetermined threshold;
determining (32) whether the inactive time period is greater than a first predetermined time period;
exiting (33) the application corresponding to the current traversed identification if the inactive time period is greater than the first predetermined time period,
the method further comprising:
detecting (34) whether the inactive time period is greater than a second predetermined time period if the inactive time period is not greater than the first predetermined time period; and
releasing (35) a memory occupied by a user interface in the application corresponding to the current traversed identification if the inactive time period is greater than the second predetermined time period, wherein the second predetermined time period is less than the first predetermined time period.

2. The method according to claim 1, wherein creating the application list according to the running applications in the operating system comprises:
calculating (21) running state priorities of the running applications in the operating system, wherein the running state priorities rank from high to low as: foreground, visible, appreciable, background;
sequencing (23) the identifications of the running applications according to the running state priorities from high to low to obtain the application list.

3. The method according to claim 2, wherein determining whether the application corresponding to the current traversed identification is a background application comprises:
obtaining (24) a running state priority of the application corresponding to the current traversed identification;
determining (25) that the application corresponding to the current traversed identification is a background application if the running state priority of the application corresponding to the current traversed identification is background.

4. The method according to claim 2 or 3, wherein selecting an identification corresponding to a background application from the application list comprises:
finding (28) one or more identifications preceding the current traversed identification in the application list and not included in the predetermined white list;
selecting (29) one of the one or more identifications or selecting an identification closest to the current traversed identification from the one or more identifications, if at least one identification preceding the current traversed identification in the application list and not included in the predetermined white list is found;
selecting (30) the current traversed identification if no identification preceding the current traversed identification in the application list and not included in the predetermined white list is found.

5. The method according to any one of claims 1 to 4, further comprising:
obtaining an inactive time period of the application corresponding to the current traversed identification if the predetermined white list does not comprise the current traversed identification and the number is not greater than the predetermined threshold;
determining (38) whether the inactive time period is greater than a third predetermined time period;
releasing (39) a memory occupied by a user interface in the application corresponding to the current traversed identification if the inactive time period is greater than the third predetermined time period.

6. The method according to any of claims 1 to 5, wherein obtaining the inactive time period of the application corresponding to the current traversed identification comprises:
counting a time period for which a process of the application corresponding to the current traversed identification does not interact with other processes in the operating system;
defining the time period as the inactive time period.

7. A device for controlling a background application, comprising:
a creating unit (31), configured to create an application list according to running applications in an operating system, wherein the application list at least comprises identifications of the running applications in the operating system;
a traversing unit (32), configured to traverse the identifications in the application list;
a first determining unit (33), configured to determine whether an application corresponding to a current traversed identification is a background application;
a second determining unit (34), configured, if the application corresponding to the current traversed identification is a background application, to determine whether a predetermined white list comprises the current traversed identification and whether a number of identifications corresponding to background applications in the application list is greater than a predetermined threshold, wherein the predetermined white list comprises identifications of background applications assigned by a user;
a first closing unit (35) configured to:
select an identification corresponding to another background application from the application list and exit the background application corresponding to the selected identification, if the predetermined white list comprises the current traversed identification and the number is greater than the predetermined threshold;
exit the application corresponding to the current traversed identification if the predetermined white list does not comprise the current traversed identification and the number is greater than the predetermined threshold,
the device further comprising:
a first obtaining unit, configured to obtain an inactive time period of the application corresponding to the current traversed identification if the predetermined white list comprises the current traversed identification and the number is not greater than the predetermined threshold;
a third determining unit, configured to determine whether the inactive time period is greater than a first predetermined time period;
a second closing unit, configured to exit the application corresponding to the current traversed identification if the inactive time period is greater than the first predetermined time period, the device further comprising:
a detecting unit, configured to detect whether the inactive time period is greater than a second predetermined time period if the inactive time period is not greater than the first predetermined time period;
a first releasing unit, configured to release a memory occupied by a user interface in the application corresponding to the current traversed identification if the inactive time period is greater than the second predetermined time period, in which the second predetermined time period is less than the first predetermined time period.

8. The device according to claim 7, wherein the creating unit comprises:
a calculating subunit, configured to calculate running state priorities of the running applications in the operating system, wherein the running state priorities rank from high to low as: foreground, visible, appreciable, background;
a sequencing subunit, configured to sequence the identifications of the running applications according to the running state priorities from high to low to obtain the application list.

9. The device according to claim 8, wherein the first determining unit comprises:
an obtaining subunit, configured to obtain a running state priority of the application corresponding to the current traversed identification;
a first determining subunit, configured to determine that the application corresponding to the current traversed identification is a background application if the running state priority of the application corresponding to the current traversed identification is background.

10. The device according to claim 8 or 9, wherein the first closing unit comprises:
a finding subunit, configured to find one or more identifications preceding the current traversed identification in the application list and not included in the predetermined white list;
a selecting subunit configured to:
select one of the one or more identifications or select an identification closest to the current traversed identification from the one or more identifications, if at least one identification preceding the current traversed identification in the application list and not included in the predetermined white list is found;
select the current traversed identification if no identification preceding the current traversed identification in the application list and not included in the predetermined white list is found.

11. A computer program product including instructions for executing the steps of a method for controlling a background application according to any one of claims 1 to 6 when said instructions are executed by a computer.

12. A recording medium readable by a computer and having recorded thereon a computer program product including instructions for executing the steps of a method for controlling a background application according to any one of claims 1 to 6.

## Patentansprüche

1. Verfahren zur Steuerung einer Hintergrundanwendung, umfassend:
Erzeugen (11) einer Anwendungsliste gemäß laufenden Anwendungen in einem Betriebssystem, wobei die Anwendungsliste zumindest Kennzeichnungen der laufenden Anwendungen in dem Betriebssystem umfasst,
Durchlaufen (12) der Kennzeichnungen in der Anwendungsliste,
Bestimmen (13), ob eine Anwendung, die einer Kennzeichnung, die aktuell durchlaufen wird, entspricht, einer Hintergrundanwendung ist,
wenn die Anwendung, die der Kennzeichnung, die aktuell durchlaufen wird, entspricht, eine Hintergrundanwendung ist, Bestimmen (14), ob eine vorbestimmte Whitelist die Kennzeichnung, die aktuell durchlaufen wird, umfasst, und ob eine Anzahl von Kennzeichnungen, die Hintergrundanwendungen entsprechen, in der Anwendungsliste größer als ein vorbestimmter Schwellenwert ist, wobei die vorbestimmte Whitelist Kennzeichnungen von Hintergrundanwendungen umfasst, die durch einen Benutzer zugewiesen werden,
Auswählen (15) einer Kennzeichnung, die einer anderen Hintergrundanwendung entspricht, aus der Anwendungsliste und Verlassen der Hintergrundanwendung, die der ausgewählten Kennzeichnung entspricht, wenn die vorbestimmte Whitelist die Kennzeichnung, die aktuell durchlaufen wird, umfasst und die Anzahl größer als ein vorbestimmter Schwellenwert ist,
Verlassen (16) der Anwendung, die der Kennzeichnung, die aktuell durchlaufen wird, entspricht, wenn die vorbestimmte Whitelist die Kennzeichnung, die aktuell durchlaufen wird, nicht umfasst und die Anzahl größer als der vorbestimmte Schwellenwert ist,
das Verfahren ferner umfassend:
Erlangen (32) eines inaktiven Zeitraums der Anwendung, die der Kennzeichnung, die aktuell durchlaufen wird, entspricht, wenn die vorbestimmte Whitelist die Kennzeichnung, die aktuell durchlaufen wird, umfasst und die Anzahl nicht größer als der vorbestimmte Schwellenwert ist,
Bestimmen (32), ob der inaktive Zeitraum größer als ein erster vorbestimmter Zeitraum ist,
Verlassen (33) der Anwendung, die der Kennzeichnung, die aktuell durchlaufen wird, entspricht, wenn der inaktive Zeitraum größer als der erste vorbestimmte Zeitraum ist,
das Verfahren ferner umfassend:
Erkennen (34), ob der inaktive Zeitraum größer als ein zweiter vorbestimmter Zeitraum ist, wenn der inaktive Zeitraum nicht größer als der erste vorbestimmte Zeitraum ist, und
Freigeben (35) eines Speichers, der durch eine Benutzeroberfläche in der Anwendung, die der Kennzeichnung, die aktuell durchlaufen wird, entspricht, belegt wird, wenn der inaktive Zeitraum größer als der zweite vorbestimmte Zeitraum ist, wobei der zweite vorbestimmte Zeitraum kleiner als der erste vorbestimmte Zeitraum ist.

2. Verfahren nach Anspruch 1, wobei das Erzeugen der Anwendungsliste gemäß den laufenden Anwendungen in dem Betriebssystem umfasst:
Berechnen (21) von Betriebszustandsprioritäten der laufenden Anwendung in dem Betriebssystem, wobei die Betriebszustandsprioritäten von hoch bis niedrig eingestuft sind als: Vordergrund, sichtbar, merklich, Hintergrund,
Sequenzieren (23) der Kennzeichnungen der laufenden Anwendungen gemäß den Betriebszustandsprioritäten von hoch bis niedrig, um die Anwendungsliste zu erlangen.

3. Verfahren nach Anspruch 2, wobei das Bestimmen, ob die Anwendung, die der Kennzeichnung, die aktuell durchlaufen wird, entspricht, eine Hintergrundanwendung ist, umfasst:
Erlangen (24) einer Betriebszustandspriorität der Anwendung, die der Kennzeichnung, die aktuell durchlaufen wird, entspricht,
Bestimmen (25), dass die Anwendung, die der Kennzeichnung, die aktuell durchlaufen wird, entspricht, eine Hintergrundanwendung ist, wenn die Betriebszustandspriorität der Anwendung, die der Kennzeichnung, die aktuell durchlaufen wird, entspricht, Hintergrund ist.

4. Verfahren nach Anspruch 2 oder 3, wobei das Auswählen einer Kennzeichnung, die einer Hintergrundanwendung entspricht, aus der Anwendungsliste umfasst:
Auffinden (28) einer oder mehrerer Kennzeichnungen, die der Kennzeichnung, die aktuell durchlaufen wird, in der Anwendungsliste vorausgehen und nicht in der vorbestimmten Whitelist beinhaltet sind,
Auswählen (29) einer der einen oder der mehreren Kennzeichnungen oder Auswählen einer Kennzeichnung, die der Kennzeichnung, die aktuell durchlaufen wird, am nächsten ist, aus der einen oder den mehreren Kennzeichnungen, wenn zumindest eine Kennzeichnung, die der Kennzeichnung, die aktuell durchlaufen wird, in der Anwendungsliste vorausgeht und nicht in der vorbestimmten Whitelist beinhaltet ist, gefunden wird,
Auswählen (30) der Kennzeichnung, die aktuell durchlaufen wird, wenn keine Kennzeichnung, die der Kennzeichnung, die aktuell durchlaufen wird, in der Anwendungsliste vorausgeht und nicht in der vorbestimmten Whitelist beinhaltet ist, gefunden wird.

5. Verfahren nach einem der Ansprüche 1 bis 4, ferner umfassend:
Erlangen eines inaktiven Zeitraums der Anwendung, die der Kennzeichnung, die aktuell durchlaufen wird, entspricht, wenn die vorbestimmte Whitelist die Kennzeichnung, die aktuell durchlaufen wird, nicht umfasst und die Anzahl nicht größer als der vorbestimmte Schwellenwert ist,
Bestimmen (38), ob der inaktive Zeitraum größer als ein dritter vorbestimmter Zeitraum ist,
Freigeben (39) eines Speichers, der durch eine Benutzeroberfläche belegt wird, in der Anwendung, die der Kennzeichnung, die aktuell durchlaufen wird, entspricht, wenn der inaktive Zeitraum größer als der dritte vorbestimmte Zeitraum ist.

6. Verfahren nach einem der Ansprüche 1 bis 5, wobei das Erlangen des inaktiven Zeitraums der Anwendung, die der Kennzeichnung, die aktuell durchlaufen wird, entspricht, umfasst:
Zählen eines Zeitraums, über welchen hinweg ein Prozess der Anwendung, die der Kennzeichnung, die aktuell durchlaufen wird, entspricht, nicht mit anderen Prozessen in dem Betriebssystem interagiert,
Definieren des Zeitraums als den inaktiven Zeitraum.

7. Vorrichtung zur Steuerung einer Hintergrundanwendung, umfassend:
eine Erzeugungseinheit (31), die konfiguriert ist, eine Anwendungsliste gemäß laufenden Anwendungen in einem Betriebssystem zu erzeugen, wobei die Anwendungsliste zumindest Kennzeichnungen der laufenden Anwendungen in dem Betriebssystem umfasst,
eine Verfahreinheit (32), die konfiguriert ist, die Kennzeichnungen in der Anwendungsliste zu durchlaufen,
eine erste Bestimmungseinheit (33), die konfiguriert ist, zu bestimmen, ob eine Anwendung, die einer Kennzeichnung, die aktuell durchlaufen wird, entspricht, eine Hintergrundanwendung ist,
eine zweite Bestimmungseinheit (34), die, wenn die Anwendung, die der Kennzeichnung, die aktuell durchlaufen wird, entspricht, eine Hintergrundanwendung ist, konfiguriert ist, zu bestimmen, ob eine vorbestimmte Whitelist die Kennzeichnung, die aktuell durchlaufen wird, umfasst, und ob eine Anzahl von Kennzeichnungen, die Hintergrundanwendungen entsprechen, in der Anwendungsliste größer als ein vorbestimmter Schwellenwert ist, wobei die vorbestimmte Whitelist Kennzeichnungen von Hintergrundanwendungen umfasst, die durch einen Benutzer zugewiesen werden,
eine erste Schließeinheit (35), die konfiguriert ist:
eine Kennzeichnung, die einer anderen Hintergrundanwendung entspricht, aus der Anwendungsliste auszuwählen und die Hintergrundanwendung, die der ausgewählten Kennzeichnung entspricht, zu verlassen, wenn die vorbestimmte Whitelist die Kennzeichnung, die aktuell durchlaufen wird, umfasst und die Anzahl größer als der vorbestimmte Schwellenwert ist,
die Anwendung, die der Kennzeichnung, die aktuell durchlaufen wird, entspricht, zu verlassen, wenn die vorbestimmte Whitelist die Kennzeichnung, die aktuell durchlaufen wird, nicht umfasst und die Anzahl größer als der vorbestimmte Schwellenwert ist, die Vorrichtung ferner umfassend:
eine erste Erlangungseinheit, die konfiguriert ist, einen inaktiven Zeitraum der Anwendung, die der Kennzeichnung, die aktuell durchlaufen wird, entspricht, zu erlangen, wenn die vorbestimmte Whitelist die Kennzeichnung, die aktuell durchlaufen wird, umfasst und die Anzahl nicht größer als der vorbestimmte Schwellenwert ist,
eine dritte Bestimmungseinheit, die konfiguriert ist, zu bestimmen, ob der inaktive Zeitraum größer als ein erster vorbestimmter Zeitraum ist,
eine zweite Schließeinheit, die konfiguriert ist, die Anwendung, die der Kennzeichnung, die aktuell durchlaufen wird, entspricht, zu verlassen, wenn der inaktive Zeitraum größer als der erste vorbestimmte Zeitraum ist, die Vorrichtung ferner umfassend:
eine Erkennungseinheit, die konfiguriert ist, zu erkennen, ob der inaktive Zeitraum größer als ein zweiter vorbestimmter Zeitraum ist, wenn der inaktive Zeitraum nicht größer als der erste vorbestimmte Zeitraum ist,
eine erste Freigabeeinheit, die konfiguriert ist, einen Speicher, der durch eine Benutzeroberfläche in der Anwendung, die der Kennzeichnung, die aktuell durchlaufen wird, entspricht, belegt wird, freizugeben, wenn der inaktive Zeitraum größer als der zweite vorbestimmte Zeitraum ist, wobei der zweite vorbestimmte Zeitraum kleiner als der erste vorbestimmte Zeitraum ist.

8. Vorrichtung nach Anspruch 7, wobei die Erzeugungseinheit umfasst:
eine Berechnungsuntereinheit, die konfiguriert ist, Betriebszustandsprioritäten der laufenden Anwendung in dem Betriebssystem zu berechnen, wobei die Betriebszustandsprioritäten von hoch bis niedrig eingestuft sind als: Vordergrund, sichtbar, merklich, Hintergrund,
eine Sequenzierungsuntereinheit, die konfiguriert ist, die Kennzeichnungen der laufenden Anwendungen in eine Reihenfolge gemäß den Betriebszustandsprioritäten von hoch bis niedrig zu bringen, um die Anwendungsliste zu erlangen.

9. Vorrichtung nach Anspruch 8, wobei die erste Bestimmungseinheit umfasst:
eine Erlangungsuntereinheit, die konfiguriert ist, eine Betriebszustandspriorität der Anwendung, die der Kennzeichnung, die aktuell durchlaufen wird, entspricht, zu erlangen,
eine erste Bestimmungsuntereinheit, die konfiguriert ist, zu bestimmen, dass die Anwendung, die der Kennzeichnung, die aktuell durchlaufen wird, entspricht, eine Hintergrundanwendung ist, wenn die Betriebszustandspriorität der Anwendung, die der Kennzeichnung, die aktuell durchlaufen wird, entspricht, Hintergrund ist.

10. Vorrichtung nach Anspruch 8 oder 9, wobei die erste Schließeinheit umfasst:
eine Auffindungsuntereinheit, die konfiguriert ist, eine oder mehrere Kennzeichnungen aufzufinden, die der Kennzeichnung, die aktuell durchlaufen wird, in der Anwendungsliste vorausgehen und nicht in der vorbestimmten Whitelist beinhaltet sind,
eine Auswahluntereinheit, die konfiguriert ist:
eine der einen oder der mehreren Kennzeichnungen auszuwählen oder eine Kennzeichnung, die der Kennzeichnung, die aktuell durchlaufen wird, am nächsten ist, aus der einen oder den mehreren Kennzeichnungen auszuwählen, wenn zumindest eine Kennzeichnung, die der Kennzeichnung, die aktuell durchlaufen wird, in der Anwendungsliste vorausgeht und nicht in der vorbestimmten Whitelist beinhaltet ist, gefunden wird,
die Kennzeichnung, die aktuell durchlaufen wird, auszuwählen, wenn keine Kennzeichnung, die der Kennzeichnung, die aktuell durchlaufen wird, in der Anwendungsliste vorausgeht und in der vorbestimmten Whitelist nicht beinhaltet ist, gefunden wird.

11. Computerprogrammprodukt, das Anweisungen beinhaltet, um die Schritte eines Verfahrens zur Steuerung einer Hintergrundanwendung nach einem der Ansprüche 1 bis 6 durchzuführen, wenn die Anweisungen durch einen Computer ausgeführt werden.

12. Speichermedium, das durch einen Computer lesbar ist und ein darauf gespeichertes Computerprogrammprodukt aufweist, das Anweisungen zum Ausführen der Schritte eines Verfahrens zur Steuerung einer Hintergrundanwendung nach einem der Ansprüche 1 bis 6 beinhaltet.

## Revendications

1. Procédé pour contrôler une application s'exécutant en arrière-plan, comprenant :
créer (11) une liste d'applications conformément à des applications en cours d'exécution dans un système d'exploitation, dans lequel la liste d'applications comprend au moins les identifiants des applications en cours d'exécution dans le système d'exploitation ;
lire (12) les identifiants dans la liste d'applications ;
déterminer (13) si une application correspondant à un identifiant courant ainsi lu est une application s'exécutant en arrière-plan ;
si l'application correspondant à l'identifiant courant est une application s'exécutant en arrière-plan,
déterminer (14) si une liste blanche prédéterminée comprend l'identifiant courant et si un nombre d'identifiants correspondant à des applications s'exécutant en arrière-plan dans la liste d'applications est supérieur à un seuil prédéterminé, dans lequel la liste blanche prédéterminée comprend des identifiants d'applications s'exécutant en arrière-plan désignées par un utilisateur ;
sélectionner (15) un identifiant correspondant à une autre application s'exécutant en arrière-plan dans la liste d'applications et sortir de l'application s'exécutant en arrière-plan correspondant à l'identifiant sélectionné, si la liste blanche prédéterminée comprend l'identifiant courant et si le nombre est supérieur au seuil prédéterminé ;
sortir (16) de l'application correspondant à l'identifiant courant si la liste blanche prédéterminée ne comprend pas l'identifiant courant et si le nombre est supérieur au seuil prédéterminé,
le procédé comprenant en outre :
obtenir (32) une période d'inactivité de l'application correspondant à l'identifiant courant si la liste blanche prédéterminée comprend l'identifiant courant et si le nombre n'est pas supérieur au seuil prédéterminé ;
déterminer(32) si la période d'inactivité est plus grande qu'une première période prédéterminée ;
sortir(33) de l'application correspondant à l'identifiant courant si la période d'inactivité est plus grande que la première période prédéterminée,
le procédé comprenant en outre :
détecter (34) si la période d'inactivité est plus grande qu'une deuxième période prédéterminée si la période d'inactivité n'est pas plus grande que la première période prédéterminée ; et
libérer (35) une mémoire occupée par une interface utilisateur dans l'application correspondant à l'identifiant courant si la période d'inactivité est plus grande que la deuxième période prédéterminée, dans lequel la deuxième période prédéterminée est plus petite que la première période prédéterminée.

2. Procédé selon la revendication 1, dans lequel la création de la liste d'applications conformément aux applications en cours d'exécution dans le système d'exploitation comprend :
le calcul (21) des priorités d'état d'exécution des applications en cours d'exécution dans le système d'exploitation, dans lequel les priorités d'état d'exécution sont classées d'élevées à faibles en tant que : premier-plan, visible, appréciable, arrière-plan ;
l'ordonnancement (23) des identifiants des applications en cours d'exécution conformément aux priorités d'exécution d'élevées à faibles pour obtenir la liste d'applications.

3. Procédé selon la revendication 2, dans lequel déterminer si l'application correspondant à l'identifiant courant est une application s'exécutant en arrière-plan comprend :
obtenir (24) une priorité d'état d'exécution de l'application correspondant à l'identifiant courant ;
déterminer (25) que l'application correspondant à l'identifiant courant est une application s'exécutant en arrière-plan si la priorité d'état d'exécution de l'application correspondant à l'identifiant courant est « arrière-plan ».

4. Procédé selon la revendication 2 ou 3, dans lequel la sélection d'un identifiant correspondant à une application s'exécutant en arrière-plan dans la liste d'applications comprend :
la recherche (28) d'un ou de plusieurs identifiants qui précèdent l'identifiant courant dans la liste d'applications et qui ne sont pas inclus dans la liste blanche prédéterminée ;
la sélection (29) de l'un desdits un ou plusieurs identifiants ou la sélection d'un identifiant le plus proche de l'identifiant courant parmi lesdits un ou plusieurs identifiants, si au moins un identifiant qui précède l'identifiant courant dans la liste d'applications et qui n'est pas inclus dans la liste blanche prédéterminée est trouvé ;
la sélection (30) de l'identifiant courant si aucun identifiant qui précède l'identifiant courant dans la liste d'applications et qui n'est pas inclus dans la liste blanche prédéterminée n'est trouvé.

5. Procédé selon l'une quelconque des revendications 1 à 4, comprenant en outre :
obtenir une période d'inactivité de l'application correspondant à l'identifiant courant si la liste blanche prédéterminée ne comprend pas l'identifiant courant et si le nombre n'est pas supérieur au seuil prédéterminée ;
déterminer (38) si la période d'inactivité est plus grande qu'une troisième période prédéterminée ;
libérer (39) une mémoire occupée par une interface utilisateur dans l'application correspondant à l'identifiant courant si la période d'inactivité est plus grande que la troisième période prédéterminée.

6. Procédé selon l'une quelconque des revendications 1 à 5, dans lequel l'obtention de la période d'inactivité de l'application correspondant à l'identifiant courant comprend :
le comptage d'une période pendant laquelle un processus de l'application correspondant à l'identifiant courant n'interagit pas avec d'autres processus dans le système d'exploitatïon ;
la définition de la période en tant que période d'inactivité.

7. Dispositif pour contrôler une application s'exécutant en arrière-plan, comprenant :
une unité de création (31), configurée pour créer une liste d'applications conformément à des applications en cours d'exécution dans un système d'exploitation, dans lequel la liste d'applications comprend au moins les identifiants des applications en cours d'exécution dans le système d'exploitation ;
une unité de lecture (32), configurée pour parcourir les identifiants dans la liste d'applications ;
une première unité de détermination (33), configurée pour déterminer si une application correspondant à un identifiant courant est une application s'exécutant en arrière-plan ;
une deuxième unité de détermination (34), configurée, si l'application correspondant à l'identifiant courant est une application s'exécutant en arrière-plan, pour déterminer si une liste blanche prédéterminée comprend l'identifiant courant et si un nombre d'identifiants correspondant à des applications s'exécutant en arrière-plan dans la liste d'applications est supérieur à un seuil prédéterminé, dans lequel la liste blanche prédéterminée comprend les identifiants d'applications s'exécutant en arrière-plan désignées par un utilisateur ;
une première unité de fermeture (35) configurée pour :
sélectionner un identifiant correspondant à une autre application s'exécutant en arrière-plan dans la liste d'applications et sortir de l'application s'exécutant en arrière-plan correspondant à l'identifiant sélectionné, si la liste blanche prédéterminée comprend l'identifiant courant et si le nombre est supérieur au seuil prédéterminé ;
sortir de l'application correspondant à l'identifiant courant si la liste blanche prédéterminée ne comprend pas l'identifiant courant et si le nombre est supérieur au seuil prédéterminé,
le dispositif comprenant en outre :
une première unité d'obtention, configurée pour obtenir une période d'inactivité de l'application correspondant à l'identifiant courant si la liste blanche prédéterminée comprend l'identifiant courant et si le nombre n'est pas supérieur au seuil prédéterminé ;
une troisième unité de détermination, configurée pour déterminer si la période d'inactivité est plus grande qu'une première période prédéterminée ;
une deuxième unité de fermeture, configurée pour quitter l'application correspondant à l'identifiant courant si la période d'inactivité est plus grande que la première période prédéterminée, le dispositif comprenant en outré :
une unité de détection, configurée pour détecter si la période d'inactivité est plus grande qu'une deuxième période prédéterminée si la période d'inactivité n'est pas plus grande que la première période prédéterminée ;
une première unité de libération, configurée pour libérer une mémoire occupée par une interface utilisateur dans l'application correspondant à l'identifiant courant si la période d'inactivité est plus grande que la deuxième période prédéterminée, dans lequel la deuxième période prédéterminée est plus petite que la première période prédéterminée.

8. Dispositif selon la revendication 7, dans lequel l'unité de création comprend :
une sous-unité de calcul, configurée pour calculer les priorités d'état d'exécution des applications en cours d'exécution dans le système d'exploitation, dans lequel les priorités d'état d'exécution sont classées d'élevées à faibles en tant que : premier-plan, visible, appréciable, arrière-plan ;
une sous-unité d'ordonnancement, configurée pour ordonner les identifiants des applications en cours d'exécution conformément aux priorités d'état d'exécution d'élevées à faibles pour obtenir la liste d'applications.

9. Dispositif selon la revendication 8, dans lequel la première unité de détermination comprend :
une sous-unité d'obtention, configurée pour obtenir une priorité d'état d'exécution de l'application correspondant à l'identifiant courant ;
une première sous-unité de détermination, configurée pour déterminer que l'application correspondant à l'identifiant courant est une application s'exécutant en arrière-plan si la priorité d'état d'exécution de l'application correspondant à l'identifiant courant est « arrière-plan ».

10. Dispositif selon la revendication 8 ou 9, dans lequel la première unité de fermeture comprend :
une sous-unité de recherche, configurée pour rechercher un ou plusieurs identifiants qui précèdent l'identifiant courant dans la liste d'applications et qui ne sont pas inclus dans la liste blanche prédéterminée ;
une sous-unité de sélection configurée pour :
sélectionner l'un desdits un ou plusieurs identifiants ou sélectionner un identifiant le plus proche de l'identifiant courant parmi lesdits un ou plusieurs identifiants, si au moins un identifiant qui précède l'identifiant courant dans la liste d'applications et qui n'est pas inclus dans la liste blanche prédéterminée est trouvé ;
sélectionner l'identifiant courant si aucun identifiant qui précède l'identifiant courant dans la liste d'applications et qui n'est pas inclus dans la liste blanche n'est trouvé.

11. Produit-programme d'ordinateur comprenant des instructions pour exécuter les étapes d'un procédé pour contrôler une application s'exécutant en arrière-plan selon l'une quelconque des revendications 1 à 6 lorsque lesdites instructions sont exécutées par un ordinateur.

12. Support d'enregistrement pouvant être lu par un ordinateur et sur lequel est enregistré un produit-programme d'ordinateur comprenant des instructions pour exécuter les étapes d'un procédé pour contrôler une application s'exécutant en arrière-plan selon l'une quelconque des revendications 1 à 6.
